# EUROPEAN PATENT APPLICATION

(11) **EP 1 734 216 A2**
(43) Date of publication of application: **20.12.2006**
(21) Application number: 06011955.9
(22) Date of filing: 09.06.2006
(51) Int. Cl.: E06B 3/20

(54) **Frame assembly for vehicle opening and associated method of manufacture**

(30) Priority: 09.06.2005 US 689165 P; 07.06.2006 US 448515
(71) Applicant: Thetford Corporation, Ann Arbor, Michigan 48106 (US)
(72) Inventor: Gloerfeld, Joachim, 58640 Iserlohn (DE); Rijn, Gerard, 4872 MR Etten-Leur (NL)
(74) Representative: Grosse, Rainer

(57) **Abstract**

The frame (102) can include straight segments (120) interconnected by corner segments (122). The method includes forming the straight segments, heating at least end portions the straight segments, and bonding the corner segments (122) between adjacent straight segments (120).

## Description

### CROSS-REFERENCE TO RELATED APPLICATIONS

This application daims priority to United States Provisional Patent Application No. 60/689,165 filed June 9, 2005, which application is herein expressly incorporated by reference.

### INTRODUCTION

Vehicles, including but not limited to recreational vehicles which are commonly referred to in the United States as RVs and in Europe as caravans, conventionally incorporate entry doors and access or service doors. Each type of door comes in various sizes and shapes typically dictated by the original equipment manufacturer (OEM). Examples of known doors and associated door frames are shown and described in commonly assigned U.S. Patent Nos. 5,746,466 and 4,906,033. The disdosures of U.S. Patent Nos. 5,746,466 and 4,906,033 are incorporated by reference herein as if fully set forth herein.

Although existing vehicle doors and door frames can be satisfactory for their intended purposes, frame assemblies and associated method of manufacture which are more cost-efficient remain.

### SUMMARY

The present teachings provide a method of manufacturing a frame for a vehicle opening. The frame can include straight segments interconnected by corner segments. The method includes forming the straight segments, heating at least portions of the straight segments, and bonding the corner segments between adjacent straight segments. Bonding can include, for example, injection molding and/or injection welding. The straight segments can be pre-fabricated.

The present teachings additionally provide a frame assembly for a vehicle opening. The frame assembly includes a frame having a plurality of straight segments interconnected with corner segments. The straight segments are prefabricated and the corner segments are bonded between pairs of adjacent straight segments.

The present teachings also provide a method for manufacturing a three-dimensional structure having at least a first segment connected to a second segment. The method includes heating at least an end portion of the first segment and bonding the second segment to the first segment.

Further areas of applicability of the present invention will become apparent from the detailed description provided hereinafter. It should be understood that the detailed description and specific examples are intended for purposes of illustration only and are not intended to limit the scope of the invention.

### BRIEF DESCRIPTION OF THE DRAWINGS

The present invention will become more fully understood from the detailed description and the accompanying drawings, wherein:

FIG. 1 is an environmental view illustrating various frame assemblies for vehicle openings according to the present teachings, the various frame assemblies shown operatively associated with an exemplary vehicle.

FIG. 2 is a perspective view of a frame assembly according to the present teachings, the frame assembly shown with a closure member articulated to a partially open position.

FIG. 3 is front view of a frame assembly according to the present teachings, the frame assembly shown with a closure member articulated to a fully closed position.

FIG. 4 is a simplified, plan view of a fixture system illustrating a manufacturing process for a frame assembly according to the present teachings.

FIG. 5 is a perspective view of corner detail the fixture system of FIG. 4.

FIG. 6 is an enlarged view of a portion of the frame according to the present teachings.

FIG. 7 is a cross-sectional view taken along the line 7-7 of FIG. 6.

### DESCRIPTION OF VARIOUS ASPECTS

The following description is merely exemplary in nature and is in no way intended to limit the scope of the present disclosure, its application, or uses. For example, while the present teachings are particularly illustrated for wall frames and panel frames for doors and windows in vehicle applications, the present teachings can be used for various other vehicle and non-vehicle, three-dimensional structures.

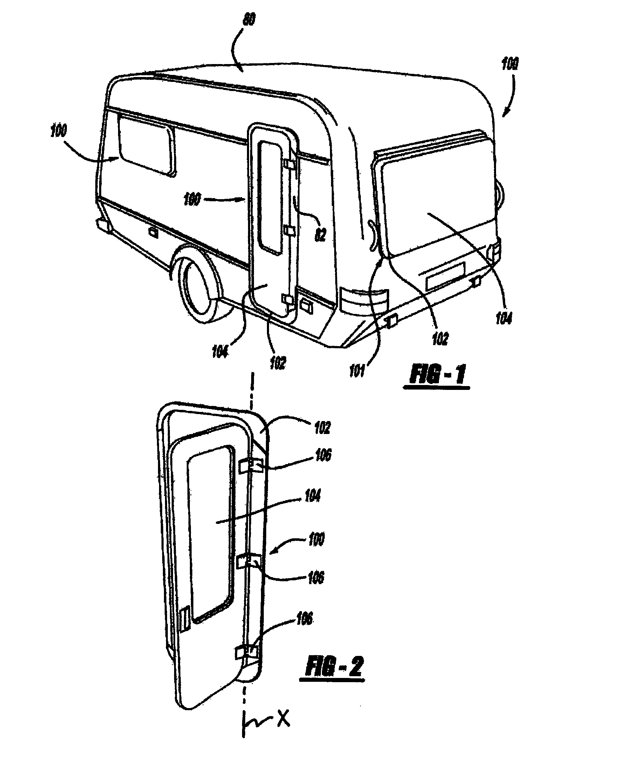

Referring initially to FIG. 1, an exemplary frame assembly 100 according to the present teachings is illustrated in the environment of a vehicle 80. The vehicle 80 can be, for example, a recreational, commercial or private-use vehicle, including a truck, boat, automobile, bus, train, aircraft or other mobile transportation unit that includes entrance, access or service openings such as doors and windows. The frame assembly 100 can include a frame 102 for mounting on a wall of an opening 82 of the vehicle 80, and a door, window or other closure member 104 that is coupled to the frame 102 and movable between positions of partial or complete opening/closing of the opening 82. In such cases, the frame 102 is directly coupled to the structure of the vehicle 80 defining a "wall frame". The frame 102 can also be part of the closure member 104 itself, defining a door/window "panel frame", as indicated at 101 in connection with a window-type closure member 104. Furthermore, the term ''frame'' as used broadly herein shall include a frame for a door such as door 104.

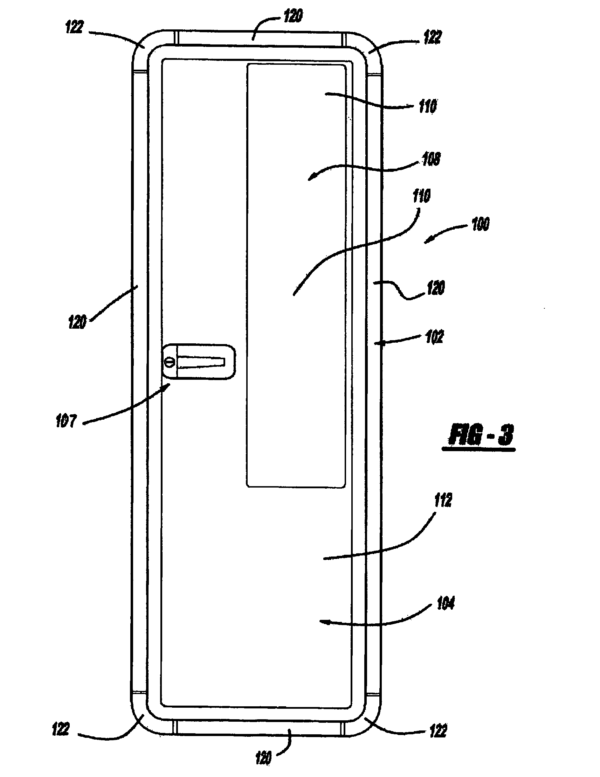

With continued referenced to FIG. 1 and additional reference to FIGS. 2 and 3, the frame assembly 100 is illustrated for a closure member 104 which is an entry or service door. The closure member 104 is shown articulated to a partially open position in FIG. 2. FIG. 3 illustrates a similarly constructed frame assembly 100 with a closure member 104 articulated to a closed position. In these exemplary illustrations, the closure member 104 may be coupled to the frame 102 with hinges 106 disposed along one side for pivoting movement about an axis X. Alternatively, other coupling mechanisms can be used. It will again be understood that although the frame assembly 100 is illustrated for a vehicle door, the present teachings are applicable to any frame structures that defining openings having movable closure members 104. Additionally, the present teachings are applicable to frames for closure members 104 themselves.

With continued reference to FIG. 3, the closure member 104 of the frame assembly 100 can include a handle 107. The handle 107 can be provided with or without a lock. The closure member 104 additionally includes a door window 108 and a recessed outer surface 112 that integrates the door window 108 and the handle 107. The outer surface 112 can be planar or slightly curved. It will be appreciated that closure members 104, such as, for example, entry doors, service doors, windows, and luggage doors, can have various dimensions depending on the application and are typically required to satisfy the needs of original equipment manufacturers (OEMs). Manufacturing multiple sized frames conventionally requires a dedicated mold for each size. The mold must be sufficiently sized to accommodate the height and width of the frame. As will be appreciated by those skilled in the art, the capital investment costs associated with such molds are significant.

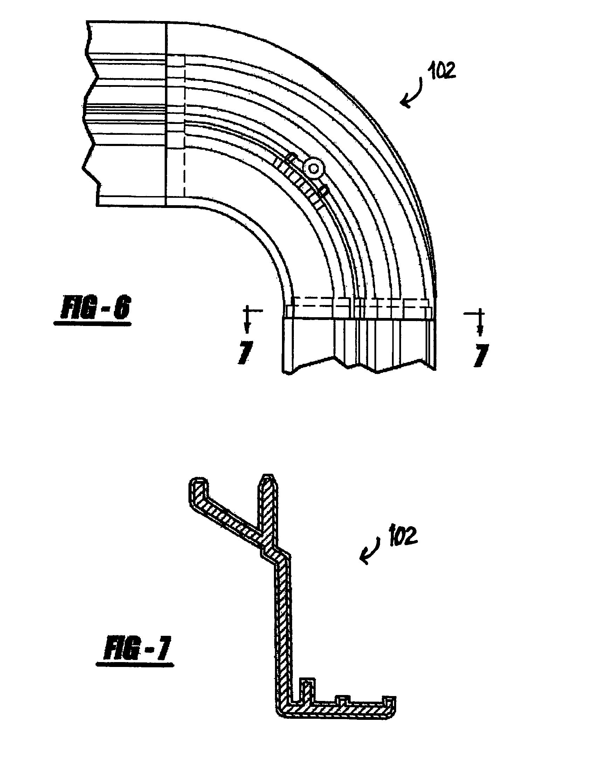

Among other advantages, the present teachings allow efficient manufacturing of frames 102 of different sizes without the need of dedicated equipment or molds for each size. Referring to FIG. 3, the frame 102 can include a plurality of first segments 120 and a plurality of second segments 122. The first segments can be straight segments 120. The second segments can be corner segments 122. The straight segments 120 can be interconnected with corner or intermediate segments 122. The corner segments 122 can be curved, as shown in FIGS. 3 and 6 or have an L-shape configuration. For a frame 102 configured for a substantially rectangular opening 82, four straight segments 120 are connected with four corner segments 122 to define a substantially rectangular frame 102 with curved or L-shaped corners. It will be appreciated that while described with reference to a three dimensional structure having straight segments 120 and corner segments 122, the present teachings have application for various other three dimensional objects. These other objects may or may not include straight segments.

In one aspect, the straight segments 120 can be pre-fabricated by known methods, such as, for example, forming, extrusion welding, or other material-appropriate methods. The straight segments 120 can be pre-fabricated to specification or cut to size after fabrication. The end portions of the straight segments 120, the corner segments 122 or both the straight and corner segments 120 and 122 can be heated. For example, the end portions of the straight segments 120 can be heated to a temperature appropriate for bonding with the corner segments 122, such as 280° C, and thereby improve bonding strength. The segments 120 and 122 can be heated by heating of the mold. The corner segments 122 can then be bonded to adjacent straight segments 120 by injection molding or injection welding in situ. In some applications, it may be desirable to prevent oxidation by heating in an inert gas atmosphere.

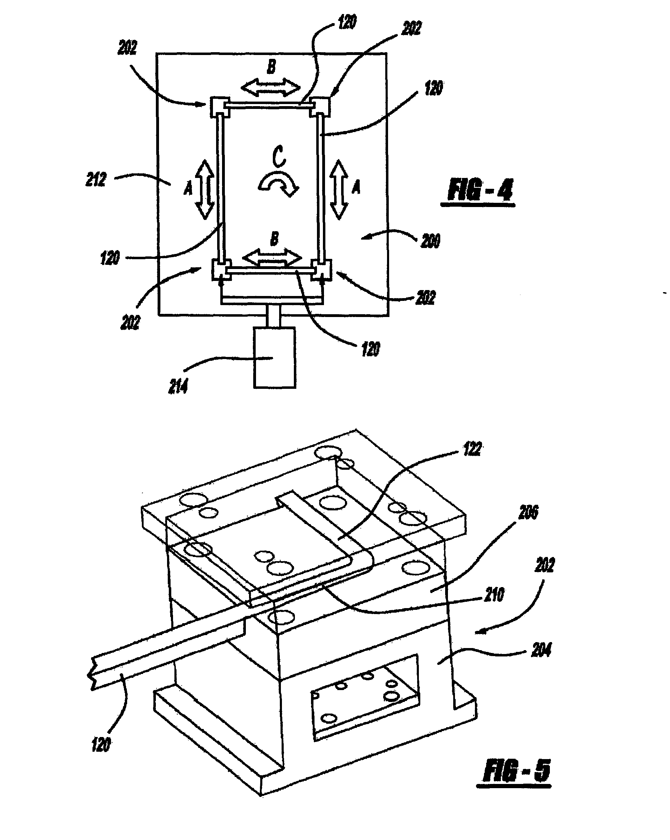

Turning to FIGS. 4 and 5, four straight segments 120 can be arranged on a fixture system 200 that includes a turntable 212 and four corner support units 202. The fixture system 200 can allow size adjustability in two orthogonal directions as illustrated by double-arrowed axes "A" and "B" to accommodate frames 102 that have different heights and/or widths. Each support unit 202 can include, for example, a base 204, and a plate 206 that can slide relative to the base 204 in any direction along axes A and/or B. The support unit 202 can be configured to provide a mold for the corner segments 122. The mold can be defined by an appropriately shaped channel 210 of the plate 206, or can be a separate mold that can be received into the channel 210. The turntable 212 can rotate about an axis (see Arrow C) perpendicular to a plane defined by the straight segments 120.

With particular reference to FIG. 4, a molding tool 214, such as, for example, an injection welder or extrusion welder can be provided adjacent one of the straight segments 120. The molding tool 214 can provide bonding material for two of the corner segments 122, thereby bonding together three consecutive straight segments 120 of the frame 102. The bonding material may include molten material identical to or compatible with the material of the straight segments 120 or the corner segments 122. The turntable 212 can then be rotated by an angle of approximately 180 degrees, such that opposite corner segments 122 can be welded, completing the bonding of the frame 102. In another aspect, the corner segments 122 can be bonded one at a time sequentially using, for example, handheld or portable injection molders/welders, although fixed position molders/welders can also be used.

FIG. 6 illustrates a detailed view of a corner segment 122 molded on two adjacent straight segments 120. FIG. 7 is a cross-sectional view through the corner segment 122. The particular cross section shown will be understood to be merely exemplary. FIG. 7 shows the bonding material or the outside of the frame 102. As shown, the bonding material can completely surround the frame 102. Upon cooling, a minor seem may be slightly perceptible but otherwise inconsequential.

The frame 102 can be manufactured from various materials having compatible bonding properties. For example, the straight segments 120 and the corner segments 122 can be manufactured from any identical or different materials that can be injection molded or injection welded to each other. In some applications, any thermoplastic material, or composite thereof, can be used. Thermoplastic materials reinforced with glass or other material, and thermoplastic materials with various modifiers, including elastomers, such as rubber, can also be used. Appropriate materials include, for example, Acrylonite Styrene Acrylate (ASA) plastics, such as the Luran^{®} S product range manufactured by BASF Corporation, Wyandotte, Michigan.

it will again be appreciated from the above description that the present teachings provide cost-efficient methods for manufacturing three-dimensional structures of various sizes and shapes that can be used for various purposes, and are not just limited to wall frames or panel frames. The structures can include a plurality of straight segments 120 having various lengths. The straight segments 120 can be pre-fabricated, and bonded with interconnecting intermediate segments 122 using joining methods that provide strong bonds, such as injection molding or injection welding at elevated temperatures in the presence of inert gas atmosphere to prevent oxidation.

Consistent with the present teachings, the bonding material may be introduced to completely form the corner segments 122 or the bonding material may simply define the connection between corner segments 122 and straight segments 120.

The foregoing discussion discloses and describes merely exemplary arrangements of the present invention. One skilled in the art will readily recognize from such discussion, and from the accompanying drawings and claims, that various changes, modifications and variations can be made therein without departing from the spirit and scope of the invention as defined in the following claims.

## Claims

1. A method for manufacturing a frame for a vehicle opening having straight segments interconnected by corner segments, the method comprising:
forming the straight segments;
heating at least end portions of the straight segments;
bonding the corner segments between adjacent straight segments;
wherein bonding the corner segments between adjacent segments occurs after forming straight segments.

2. The method of claim 1, wherein bonding the corner segments between adjacent straight segments comprises introducing bonding material.

3. The method of daim 1, wherein introducing bonding material includes surrounding the frame with bonding material.

4. The method of daim 1, wherein heating comprises heating in an inert gas atmosphere.

5. The method of claim 1, wherein bonding comprises injection molding or injection welding.

6. The method of claim 1, further comprising selecting the straight segments from a plurality of straight segments having differing lengths to create a frame having a desired dimension.

7. The method of claim 1, wherein bonding the corner segments comprises bonding sequentially each corner segment between adjacent straight segments.

8. The method of claim 1, wherein bonding the corner segments comprises:
bonding at least a first corner segment;
rotating the frame; and
bonding at least a second corner segment.

9. The method of claim 8, wherein at least a first corner segment comprises two consecutive corner segments, and at least a second corner segment comprises at least two other consecutive corner segments.

10. The method of claim 8, wherein rotating the frame comprises rotating a table on which the frame is supported.

11. The method of claim 1, wherein the frame is a wall frame for the vehicle opening.

12. The method of daim 1, wherein the frame is a panel frame of a movable closure member for the vehicle opening.

13. A frame assembly for a vehicle opening comprising:
a frame having a plurality of straight segments interconnected with corner segments, wherein:
the straight segments are selected from a plurality of straight segments having various lengths prefabricated; and
the corner segments are bonded between pairs of adjacent straight segments.

14. The frame assembly of daim 16, wherein the frame is a wall frame for the vehicle opening.

15. The frame assembly of daim 15, wherein the straight segments are extruded.

16. The frame assembly of claim 15, wherein the straight segments are cut to a desired size after extrusion.

17. The frame assembly of daim 13, wherein the corner segments are injection molded or injection molded.

18. The frame assembly of claim 13, wherein the frame comprises thermoplastic material.

19. A method for manufacturing a three-dimensional structure having at least a first segment connected to a second segment, the method comprising:
forming the first segment;
heating at least an end portion of the first segment;
bonding the second segment to the first segment; and
wherein forming the first segment occurs after bonding the second segment to the first segment.

20. The method of claim 19, wherein bonding comprises injection molding or injection welding.
